# EUROPÄISCHE PATENTSCHRIFT

(11) **EP 2 196 338 B1**
(45) Veröffentlichungstag und Bekanntmachung des Hinweises auf die Patenterteilung: **26.10.2011**
(21) Anmeldenummer: 09015178.8
(22) Anmeldetag: 08.12.2009
(51) Int. Cl.: B60G 17/04, B60G 17/052, B60G 17/08, F15B 1/02

(54) **Vorrichtung zur Niveauregelung**
Level regulation device
Dispositif de réglage du niveau

(30) Priorität: 10.12.2008 DE 102008061477
(43) Veröffentlichungstag der Anmeldung: 16.06.2010
(73) Patentinhaber: Audi AG, 85045 Ingolstadt (DE)
(72) Erfinder: Willems, Marco, 85049 Ingolstadt (DE)
(74) Vertreter: Asch, Konrad

(56) Entgegenhaltungen:
- EP-A2- 1 243 447
- WO-A1-2005/105492
- WO-A1-2007/035997
- DE-A1- 4 116 399
- JP-A- 1 218 911
- US-A- 5 322 321

## Beschreibung

Die Erfindung betrifft eine Vorrichtung zur Niveauregelung der Fahrzeugaufbauten von Kraftfahrzeuge gemäß dem Oberbegriff des Patentanspruches 1.

Aus dem Stand der Technik sind Vorrichtungen zur Niveauregelung bekannt, die entweder nach dem Prinzip der offenen Luftversorgung oder nach der geschlossenen Luftversorgung funktionieren. Bei der offenen Luftversorgung saugt ein Kompressor Außenluft an und drückt diese unter Zwischenschaltung eines Druckspeichers zur Niveauanhebung in die Federelemente, während die Druckluft zur Niveauabsenkung aus den Federelementen zur Atmosphäre abgeblasen wird.

Bei der geschlossenen Luftversorgung wird der Druck aus den Luftfedern nicht ungenutzt in die Umgebung abgelassen, sondern in einem Druckspeicher gespeichert. Dennoch ist es erforderlich, dass ein Kompressor die Luft im Druckspeicher auf ein hohes Druckniveau verdichtet. Dies geschieht im Allgemeinen dadurch, dass der Kompressor die im Druckspeicher gespeicherte Luft erst beim Regelvorgang verdichtet. Der Kompressor muss daher bei jedem Regelvorgang Arbeit verrichten. Ein weiterer Nachteil entsteht durch die Wiederverwendung des Arbeitsfluids. In einer geschlossenen Luftversorgung wird mit Ausnahme der Leckageverluste die Luft in einem Kreislauf geführt. In der Praxis ergeben sich durch den geringen Luftmassenaustausch Probleme mit eindringender Feuchtigkeit in das System.

Eine solche geschlossene Luftversorgung ist aus der DE 199 59 556 C1 bekannt. Hier wird zum Absenken des Niveaus des Kraftfahrzeuges die in den Federelementen befindliche Druckluft über den Kompressor in den Druckspeicher zurückgefördert. Damit kann der Wirkungsgrad der Niveauregelvorrichtung verbessert werden, jedoch sind relativ häufige Anschaltungen des Kompressors erforderlich.

Aus der WO-A-20051105492 ist eine gattungsgemäße Vorrichtung zur Niveauregelung von Fahrzeugaufbauten von Kraftfahrzeugen bekannt. Bei dieser Vorrichtung kommt ein Druckspeicher zum Einsatz, der zum Ablassen von Arbeitsfluid über ein ansteuerbares Wegeventil mit einer drucklosen Entspannungsleitung verbindbar ist.

Aufgabe der Erfindung ist es, eine Vorrichtung zur Niveauregulierung bei Fahrzeugen bereitzustellen, die einen guten Wirkungsgrad aufweist.

Diese Aufgabe wird erfindungsgemäß mit den Merkmalen des Patentanspruches 1 gelöst. Vorteilhafte Weiterbildungen der Erfindung sind den weiteren Patentansprüchen entnehmbar.

Gemäß dem kennzeichnenden Teil ist der Druckspeicher über ein aussteuerbares Wegeventil mit einer drucklosen Entspannungsleitung verbindbar. Auf diese Weise kann in vorgebbaren Betriebszuständen das Arbeitsfluid über die Entspannungsleitung abgelassen werden. Ansonsten kann die Vorrichtung zur Niveauregelung bei geschlossenem Wegeventil nach dem Prinzip der geschlossenen Luftversorgung arbeiten. Erfindungsgemäß kombiniert die Vorrichtung daher die offene mit der geschlossenen Luftversorgung.

Der Druckspeicher ist als Druckübersetzer mittels eines verschieblichen Teilungselementes in zwei Kammern A und B unterteilt. Die Kammer A ist mit einer kleineren wirksamen Teilungsfläche über ein erstes Wegeventil mit dem Kompressor und/oder den Federelementen verbindbar. Demgegenüber ist die Kammer B mit der größeren wirksamen Teilungsfläche über zumindest ein zweites Wegeventil zum Absenken des Fahrzeugniveaus mit den Federelementen oder einer drucklosen Entspannungsleitung verbindbar.

Der Druckspeicher kann als Druckübersetzer mittels eines verschieblichen Teilungselementes in zwei Kammern A und B unterteilt sein. Die Kammer A kann mit einer kleineren wirksamen Teilungsfläche über ein erstes Wegeventil mit dem Kompressor und/oder den Federelementen verbindbar sein. Demgegenüber kann die Kammer B mit der größeren wirksamen Teilungsfläche über zumindest ein zweites Wegeventil zum Absenken des Fahrzeugniveaus mit den Federelementen oder einer drucklosen Entspannungsleitung verbindbar sein.

Über die Wegeventile wird bei einer Niveauabsenkung die in den Federelementen vorgespannte Luft in die Kammer B mit der größeren wirksamen Teilungsfläche geleitet und bewirkt durch die Druckübersetzung eine Rekuperation bzw. eine Druckanhebung in der Kammer A, über die dann bei höherem Systemdruck die Federelemente zur Niveauanhebung wieder befüllbar sind, gegebenenfalls ohne Zuschaltung des Kompressors. Wird der Kompressor zeitgleich oder verzögert dazu geschaltet, so wird über das zweite Wegeventil Druck aus der Kammer B in die Atmosphäre abgelassen, während der Kompressor gefilterte und gegebenenfalls getrocknete Frischluft ansaugt. Dies führt zu einem gewissen Austausch des Luftmassenstromes, der gegenüber einer rein offenen Luftversorgung jedoch deutlich vermindert ist.

Das Teilungselement des Druckspeichers kann zum Beispiel durch zwei miteinander gekoppelte Rollbälge gebildet sein, die unterschiedliche Teilungsflächen aufweisen. Bevorzugt wird jedoch vorgeschlagen, einen zylinder förmigen Druckspeicher mit einem verschiebbaren Differenzialkolben vorzusehen, der eine kleinere und eine größere wirksame Kolbenfläche aufweist.

Alternativ zu den Differenzialkolben sind zwei über eine Koppelungsstange verbundene Membrane denkbar.

Des Weiteren kann die Versorgungsleitung zu den Federelementen ein drittes Wegeventil aufweisen, das alternierend mit dem ersten Wegeventil zur Kammer A mit der kleineren wirksamen Teilungsfläche oder dem zweiten Wegeventil zur zweiten Kammer B mit der größeren Teilungsfläche umschaltbar ist. Dies schafft insbesondere größere Freiheitsgrade in der Regelungsauslegung der Vorrichtung mit zeitlicher Abfolge in der Befüllung und Entlüftung der Federelemente.

Dabei können zur Vereinfachung der Steuerungsfunktionen den Wegeventilen als Druckhalteventile ausgebildete Rückschlagventile nachgeschaltet sein.

In vorteilhafter Weiterbildung der Erfindung kann ferner die Kammer B mit der größeren wirksamen Teilungsfläche über eine weitere Druckleitung und ein Sperrventil ebenfalls mit dem Kompressor verbindbar sein, um so beide Kammern A und B hinsichtlich der Systemdrücke und der Stellwege des Teilungselementes in regelungstechnisch günstige Bereiche einzustellen und zu halten.

Dabei kann das Sperrventil in der weiteren Druckleitung insbesondere abhängig vom Druck in der Kammer B und/oder in der Kammer A des Druckspeichers gesteuert sein.

Schließlich kann hinsichtlich des Wirkungsgrades der Vorrichtung günstiger Weise in der Entspannungsleitung stromab des zweiten Wegeventiles eine Drosselstelle (Diffusor) mit einem Wärmetauscher angeordnet sein, wobei der Wärmetauscher mittels eines Kühlmediums ein Aggregateteil des Kraftfahrzeuges, insbesondere jedoch den Kompressor oder Druckluftleitungen der Niveauregelung kühlt.

Ein Ausführungsbeispiel der Erfindung ist im Folgenden mit weiteren Einzelheiten näher erläutert. Die schematische Zeichnung zeigt als Blockschaltbild eine Vorrichtung zur Niveauregelung eines Kraftfahrzeuges mit einem funktionell zwischen einen Kompressor als Druckquelle und Federelementen eingeschalteten, als Druckübersetzer wirkenden Druckspeicher.

Die mit 10 bezeichnete Vorrichtung zur Niveauregelung des Fahrzeugaufbaus eines Kraftfahrzeuges setzt sich im Wesentlichen zusammen aus einem Kompressor 12, einem Druckspeicher 14 und vier pneumatischen Federelementen 15, die über noch zu beschreibende Leitungen und Ventile miteinander funktionell verknüpft sind.

Der bevorzugt elektrisch angetriebene Kompressor 12 und die elektrisch betätigbaren Ventile sind über ein nicht dargestelltes elektronisches Steuergerät nach Maßgabe von Wegsensoren der Federelemente, nach fahr dynamischen Parametern und durch Signale nicht dargestellter Drucksensoren wie nachstehend beschrieben zur Einstellung der gewünschten Niveaulage des Kraftfahrzeuges angesteuert.

Der Druckspeicher 14 der Vorrichtung 10 weist ein zylinderförmiges Gehäuse 14a mit unterschiedlichen Durchmessern auf, das mittels eines verschiebbar angeordneten Differenzialkolbens 16 als Druckübersetzer in zwei Kammern A und B unterteilt ist. Der Differenzialkolben 16 weist eine kleinere wirksame Kolbenfläche 16a und eine größere wirksame Kolbenfläche 16b auf.

Der Kompressor 12 saugt über eine nur angedeutete Saugleitung 18 gefilterte und gegebenenfalls getrocknete Umgebungsluft an und drückt diese im aktivierten Zustand über ein Rückschlagventil 28 und eine erste Druckleitung 20 mit einem ersten 3/2 Wegeventil 22 in die Kammer A des Druckspeichers 14.

Ferner ist der Kompressor 12 über eine zweite Druckleitung 24 mit einem Sperrventil 26 und einem nachgeschalteten Rückschlagventil 28 mit der Kammer B des Druckspeichers 14 verbunden.

Die Federelemente 15, die zum Beispiel Federbeine der Radaufhängung des Kraftfahrzeuges mit Rollbälgen sein können, sind über Versorgungsleitungen 30 an ein drittes 3/2 Wegeventil 31 angeschlossen, das die Versorgungsleitungen 30 alternierend mit einer Druckleitung 32 oder einer Rückführleitung 34 verbindet.

Dabei ist die Druckleitung 32 an das erste Wegeventil 22 angeschlossen und kann über dieses mit der Kammer A des Druckspeichers 14 verbunden werden.

In die Rückführleitung 34 - die in die Kammer B des Druckspeichers 14 mündet - sind ein Rückschlagventil 28 und zweites 3/2 Wegeventil 36 eingeschaltet, das auf eine Entspannungsleitung 38 umschaltbar ist und dann die Kammer B des Druckspeichers 14 mit einer drucklosen Stelle 40 (zum Beispiel einem Rohluftraum eines Ansaugluftfilters einer Brennkraftmaschine) beziehungsweise der Atmosphäre verbindet.

In der Entspannungsleitung 38 ist ein nur angedeuteter Wärmetauscher 42 mit einem Diffusor und einem Kühlmedium vorgesehen, in dem abgeblasene Systemluft entspannt und die entzogene Wärme über eine Kühlmittelleitung 44 zur Kühlung des Kompressors 12 und/oder der Druckleitungen 20, 24, 32 eingesetzt ist.

Zur individuellen Ansteuerung der Federelemente 15 können in den Versorgungsleitungen 30 in den jeweiligen Einzelleitungen Sperrventile vorgesehen sein, die eine getrennte Druckbeaufschlagung oder Druckabsenkung der Federelemente 16 durch entsprechende Ansteuerung über das elektronische Steuergerät (nicht dargestellt) bewirken können.

Zur Erstbefüllung der beschriebenen Vorrichtung 10 beziehungsweise Niveauregelung wird Luft von dem Kompressor 12 verdichtet und über das Rückschlagventil 28 und das Wegeventil 22 in die Kammer A des Druckspeichers 14 bis zum Erreichen eines definierten Betriebsdruckes P gefördert. Die Kammer B ist bis zum Erreichen dieses Druckes nur mit dem Umgebungsdruck beaufschlagt.

Ist der maximale Betriebsdruck in Kammer A erreicht, öffnet das Sperrventil 26 in der Druckleitung 24, so dass auch die Kammer B über den Kompressor 12 mit dem Betriebsdruck P beaufschlagt wird. Durch die Druckübersetzung über den Differenzialkolben 16 entsteht in der Kammer A ein erhöhter Druck P₁. Der Kompressor 12 wird nach Erreichen des Betriebsdruckes P in der Kammer B abgeschaltet. Eine Rückströmung geförderter Luft wird durch die eingeschalteten Rückschlagventile 28 unterbunden.

Wird eine Anhebung des Fahrzeugniveaus gestartet, so verbinden das Wegeventil 22 in der Druckleitung 20 und das Wegeventil 31 die Kammer A mit den Versorgungsleitungen 30, wodurch die Federelemente 15 entsprechend befüllt werden.

Ist das gewünschte Fahrzeugniveau erreicht, so unterbricht das Wegeventil 22 die Verbindung zur Kammer A.

Druckabhängig gesteuert fördert sodann der Kompressor 12 Luft in die Kammer A bis zum Erreichen des Systemdruckes P.

Gleichzeitig verbindet das Wegeventil 36 die Kammer B über die Rückführleitung 34 mit der Entspannungsleitung 38, so dass Luft aus der Kammer B über den Wärmetauscher 42 in die Atmosphäre bei 40 abströmen kann.

Bei einer erforderlichen Absenkung des Fahrzeugniveaus schließen das Wegeventil 31 und das Wegeventil 36 die Versorgungsleitung 30 der Federelemente 15 über die Rückführleitung 34 an die Kammer B an. Diese wird somit mit dem Druck aus den Federelementen 15 beaufschlagt und komprimiert wiederum durch die Druckübersetzung im Druckspeicher 14 die Luft in Kammer A auf den erhöhten Systemdruck P₁. Ist der erforderliche Druck in der Kammer B nicht ausreichend, kann durch Zuschalten des Kompressors 12 und Öffnen des Sperrventiles 26 der Druck in der Kammer B auf den Systemdruck P erhöht werden.

Der geschlossene Zustand der Wegeventile 22, 36 und 31 wird in schaltungstechnisch einfacher Weise durch die jeweils den Wegeventilen 22, 36 und 31 geschalteten Rückschlagventile 28 beziehungsweise Druckhalteventile hergestellt.

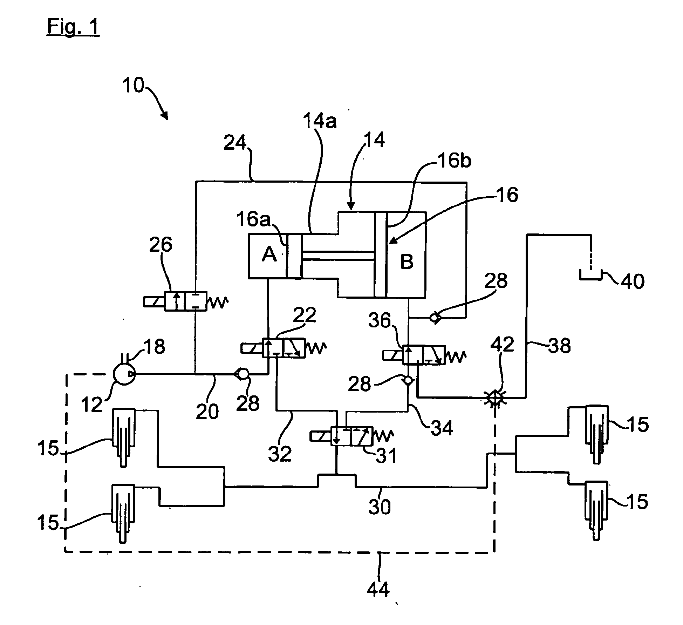

## Patentansprüche

1. Vorrichtung zur Niveauregelung von Kraftfahrzeugaufbauten mit Luftfederung, mit einem Kompressor (12) als Druckquelle, der über Druckleitungen und Wegeventile einen volumenveränderlichen Druckspeicher (14) und/oder die Federelemente (15) der Radaufhängung mit Druck beaufschlagt, wobei ferner durch entsprechende Umsteuerung der Wegeventile die Federelemente (15) zum Absenken des Fahrzeugniveaus mit dem Druckspeicher (14) verbindbar sind oder durch Schließen von Sperrventilen in den Versorgungsleitungen der Federelemente (15) im eingestellten Fahrzeugniveau haltbar sind, wobei der Druckspeicher (14) zum Ablassen von Arbeitsfluid, insbesondere Druckluft, über ein ansteuerbares Wegeventil (36) mit einer drucklosen Entspannungsleitung (38) verbindbar ist, **dadurch gekennzeichnet, dass** der Druckspeicher (14) als Druckübersetzer mittels eines verschieblichen Teilungselementes (16) in zwei Kammern (A) und (B) unterteilt ist, dass die erste Kammer (A) über ein erstes Wegeventil (22) mit dem Kompressor (12) und/oder den Federelementen (15) verbindbar ist, und dass die zweite Kammer (B) über zumindest ein zweites Wegeventil (36) zum Absenken des Fahrzeugniveaus mit den Federelementen (15) oder der drucklosen Entspannungsleitung (38) verbindbar ist.

2. Vorrichtung nach Anspruch 1, **dadurch gekennzeichnet, dass** beim Halten des eingestellten Fahrzeugniveaus eine der Kammern (B) zum Ablassen von Arbeitsfluid mit der drucklosen Entspannungsleitung (38) in Verbindung ist, und/oder die andere Kammer (A) von Kompressor (12) druckbeaufschlagt ist.

3. Vorrichtung nach einem der Ansprüche 1 oder 2, **dadurch gekennzeichnet, dass** der insbesondere zylinderförmige Druckspeicher (14) einen verschiebbaren Differenzialkolben (16) mit einer kleineren und einer größeren wirksamen Kolbenfläche (16a, 16b) aufweist.

4. Vorrichtung nach Anspruch 1, 2 oder 3, **dadurch gekennzeichnet, dass** die Versorgungsleitung (30) zu den Federelementen (15) ein drittes Wegeventil (31) aufweist, das alternierend mit dem ersten Wegeventil (22) zur Kammer (A) mit der Teilungsfläche (16a) oder dem zweiten Wegeventil (36) zur zweiten Kammer (B) mit der Teilungsfläche (16b) umschaltbar ist.

5. Vorrichtung nach einem der vorhergehenden Ansprüche, **dadurch gekennzeichnet, dass** den Wegeventilen (22, 31, 36) als Druckhalteventile ausgebildete Rückschlagventile (28) nachgeschaltet sind.

6. Vorrichtung nach einem der vorhergehenden Ansprüche, **dadurch gekennzeichnet, dass** die Kammer (B) über eine weitere Druckleitung (24) und ein Sperrventil (26) ebenfalls mit dem Kompressor (12) verbindbar ist.

7. Vorrichtung nach Anspruch 6, **dadurch gekennzeichnet, dass** das Sperrventil (26) in der weiteren Druckleitung (24) abhängig vom Druck in der Kammer (B) und/oder in der Kammer (A) des Druckspeichers (14) gesteuert ist.

8. Vorrichtung nach einem der vorhergehenden Ansprüche, **dadurch gekennzeichnet, dass** in der Entspannungsleitung (38) stromab des zweiten Wegeventiles (36) eine Drosselstelle mit einem Wärmetauscher (42) angeordnet ist und dass der Wärmetauscher (42) mittels eines eingesetzten Kühlmediums ein Aggregatteil des Kraftfahrzeuges, insbesondere den Kompressor (12) oder Druckleitungen (20, 24, 32) der Niveauregelung kühlt.

## Claims

1. Device for ride-height control of motor vehicle bodies with air suspension, having a compressor (12) as a pressure source, which compressor, via pressure lines and directional control valves, pressurizes a variable-volume pressure accumulator (14) and/or the spring elements (15) of the wheel suspension, wherein furthermore, by means of corresponding switching of the directional control valves, the spring elements (15) can be connected to the pressure accumulator (14) in order to lower the vehicle ride height, or can be held at the set vehicle ride height by means of the closure of shut-off valves in the supply lines of the spring elements (15), wherein the pressure accumulator (14) can be connected, for the discharge of working fluid, in particular compressed air, via an actuable directional control valve (36) to an unpressurized expansion line (38), **characterized in that** the pressure accumulator (14), as a pressure booster, is divided by means of a movable dividing element (16) into two chambers (A) and (B), **in that** the first chamber (A) can be connected via a first directional control valve (22) to the compressor (12) and/or the spring elements (15), and **in that** the second chamber (B) can be connected, in order to lower the vehicle ride height, via at least one second directional control valve (36) to the spring elements (15) or to the unpressurized expansion line (38).

2. Device according to Claim 1, **characterized in that**, when the set vehicle ride height is being held, one of the chambers (B) is connected, for the discharge of working fluid, to the unpressurized expansion line (38), and/or the other chamber (A) is pressurized by compressor (12).

3. Device according to either of Claims 1 and 2, **characterized in that** the in particular cylindrical pressure accumulator (14) has a movable differential piston (16) with one relatively small and one relatively large active piston surface (16a, 16b).

4. Device according to Claim 1, 2 or 3, **characterized in that** the supply line (30) to the spring elements (15) has a third directional control valve (31) which can be switched so as to be connected alternately to the first directional control valve (22) for the chamber (A) with the dividing surface (16a) or to the second directional control valve (36) for the second chamber (B) with the dividing surface (16b).

5. Device according to one of the preceding claims, **characterized in that** check valves (28) designed as pressure-maintaining valves are connected downstream of the directional control valves (22, 31, 36).

6. Device according to one of the preceding claims, **characterized in that** the chamber (B) can likewise be connected to the compressor (12) via a further pressure line (24) and a shut-off valve (26).

7. Device according to Claim 6, **characterized in that** the shut-off valve (26) in the further pressure line (24) is controlled as a function of the pressure in the chamber (B) and/or in the chamber (A) of the pressure accumulator (14).

8. Device according to one of the preceding claims, **characterized in that** a throttle point with a heat exchanger (42) is arranged in the expansion line (38) downstream of the second directional control valve (36), and **in that** the heat exchanger (42) cools an assembly part of the motor vehicle, in particular the compressor (12) or pressure lines (20, 24, 32) of the right-height control system, by means of a cooling medium which is used.

## Revendications

1. Dispositif de réglage du niveau de la carrosserie de véhicule automobile par une suspension pneumatique, avec un compresseur (12) comme source de pression, qui alimente en pression un accumulateur de pression à volume variable (14) et/ou les éléments de suspension (15) de la suspension des roues par l'intermédiaire de conduites sous pression et de distributeurs, dans lequel les éléments de suspension (15) peuvent en outre être reliés à l'accumulateur de pression (14) par une inversion correspondante des distributeurs (36) pour abaisser le niveau du véhicule ou peuvent être maintenus au niveau de véhicule réglé par fermeture de soupapes d'arrêt dans les conduites d'alimentation des éléments pneumatiques (15), dans lequel l'accumulateur de pression (14) peut être raccordé à une conduite de détente sans pression (38) pour évacuer du fluide de travail, en particulier de l'air comprimé, **caractérisé en ce que** l'accumulateur de pression (14), sous forme de convertisseur de pression, est divisé en deux chambres (A) et (B) au moyen d'un élément de division mobile (16), **en ce que** la première chambre (A) peut être reliée au compresseur (12) et/ou aux éléments de suspension (15) via un premier distributeur (22), et **en ce que** la deuxième chambre (B) peut être reliée aux éléments de suspension (15) ou à la conduite de détente sans pression (38) via au moins un deuxième distributeur (36) pour abaisser le niveau du véhicule.

2. Dispositif selon la revendication 1, **caractérisé en ce que**, lors du maintien du niveau de véhicule réglé, une des chambres (B) est en communication avec la conduite de détente sans pression (38) pour l'évacuation de fluide de travail, et/ou l'autre chambre (A) est alimentée en pression par le compresseur (12).

3. Dispositif selon l'une quelconque des revendications 1 ou 2, **caractérisé en ce que** l'accumulateur de pression (14), en particulier cylindrique, comprend un piston différentiel mobile (16) avec une plus petite et une plus grande face de piston active (16a, 16b).

4. Dispositif selon la revendication 1, 2 ou 3, **caractérisé en ce que** la conduite d'alimentation (30) vers les éléments de suspension (15) présente un troisième distributeur (31), qui peut être commuté en alternance avec le premier distributeur (22) vers la chambre (A) avec la face de séparation (16a) ou avec le deuxième distributeur (36) vers la deuxième chambre (B) avec la face de séparation (16b).

5. Dispositif selon l'une quelconque des revendications précédentes, **caractérisé en ce que** des clapets de non retour (28) réalisés sous la forme de soupapes de retenue de pression sont montés en aval des distributeurs (22, 31, 36).

6. Dispositif selon l'une quelconque des revendications précédentes, **caractérisé en ce que** la chambre (B) peut également être reliée au compresseur (12) par une autre conduite sous pression (24) et une soupape d'arrêt (26).

7. Dispositif selon la revendication 6, **caractérisé en ce que** la soupape d'arrêt (26) dans l'autre conduite sous pression (24) est commandée en fonction de la pression dans la chambre (B) et/ou dans la chambre (A) de l'accumulateur de pression (14).

8. Dispositif selon l'une quelconque des revendications précédentes, **caractérisé en ce qu'**un point d'étranglement avec un échangeur de chaleur (42) est disposé dans la conduite de détente (38) en aval du deuxième distributeur (36) et **en ce que** l'échangeur de chaleur (42) refroidit une partie d'un groupe du véhicule automobile, en particulier le compresseur (12) ou des conduites sous pression (20, 24, 32) du réglage de niveau, au moyen d'un fluide de refroidissement utilisé.
